# EUROPÄISCHE PATENTSCHRIFT

(11) **EP 2 881 297 B1**
(45) Veröffentlichungstag und Bekanntmachung des Hinweises auf die Patenterteilung: **18.03.2020**
(21) Anmeldenummer: 14191474.7
(22) Anmeldetag: 03.11.2014
(51) Int. Cl.: B60W 30/14, B60W 50/00

(54) **Verfahren zur vorausschauenden Beeinflussung einer Fahrzeuggeschwindigkeit**
Method for predictive influence of a vehicle speed
Procédé d'influence prévisionnelle de la vitesse d'un véhicule automobile

(30) Priorität: 21.11.2013 DE 102013223829
(43) Veröffentlichungstag der Anmeldung: 10.06.2015
(73) Patentinhaber: ROBERT BOSCH GMBH, 70442 Stuttgart (DE)
(72) Erfinder: Selem, Moez, 30625 Hannover (DE)

(56) Entgegenhaltungen:
- WO-A2-2012/129437
- DE-A1-102009 030 784
- HELLSTROM E: "Explicit use of road topography for model predictive cruise control in heavy trucks", EXAMENSARBETE LINKOPINGS UNIVERSITET, AVDELNINGEN FOR FORDONSSYSTEM,, Nr. LiTH-ISY-EX-05/3660-SE, 21. Februar 2005 (2005-02-21), Seiten I-VIII, XP003026991,

## Beschreibung

### Stand der Technik

Aus der DE 10345319 A1 ist ein Verfahren bekannt, das eine automatisierte, vorausschauende Beeinflussung von Fahrzeugbetriebsparametern wie z.B. der Fahrzeuggeschwindigkeit über einen Tempomaten erlaubt. Dazu wird eine voraus liegende Straßensteigung aus einer digitalen Karte verwendet. Mittels einer analytischen Fahrzeugbetriebskostenfunktion wird unter Nutzung mehrerer Umgebungsparameter, Fahrzeugparameter, Fahrzeugbetriebsparameter und Streckenparameter ein Geschwindigkeitsprofil für einen voraus liegenden Streckenabschnitt errechnet und dieses mittels eines Tempomaten automatisiert umgesetzt. Die Betriebskostenfunktion hat in der Regel zum Ziel, den Treibstoffbedarf zu minimieren und zwar unter Beibehaltung einer vorgegebenen Fahrzeit. Die Berechnung des Geschwindigkeitsprofils wird über ein iteratives Verfahren unter Nutzung der analytischen Kostenfunktion durchgeführt. Diese Schrift lehrt Daten einer Straßenkarte zu verwenden, welche eine Straßenneigungsinformation enthält.

In der Druckschrift WO 2011/126431 A1 wird ein Verfahren vorgestellt, das eine vorausschauende Beeinflussung einer Fahrgeschwindigkeit mittels Regeln beschreibt. Dabei wird die Strecke vor einem Fahrzeug in Segmente aufgeteilt und die Segmente anhand von Straßencharakteristika, wie z.B. der Straßensteigung, in diskrete Situationen klassifiziert. Beispielsweise kann sich das Fahrzeug einem Straßensegment mit hoher Steigung nähern. Auf diese diskreten Situationen wird eine Regelbasis angewendet, welche zum Ziel hat, Sollgeschwindigkeitsvorgaben für einen Tempomaten zu erzeugen, so dass eine Treibstoffeinsparung erzielbar sein soll. Die Straßencharakteristika werden von einem elektronischen Horizont geliefert, welcher mittels einer GPS-Ortsbestimmung und einer digitalen Straßenkarte eine Streckenvorausschau vor der aktuellen Fahrzeugposition bereitstellt.

Die Schrift DE 102009021019 A1 beschreibt ein weiteres Verfahren zum Erzeugen einer treibstoffverbrauchsoptimierten, vorausschauenden Fahrstrategie für Straßenfahrzeuge. Dabei wird mittels Daten einer digitalen Karte für ein zurückzulegendes Straßenstück ein Geschwindigkeitsband aus einer für jeden Streckenabschnitt zulässigen Maximalgeschwindigkeit und einer Minimalgeschwindigkeit erzeugt. Zur Bildung der erlaubten Maximalgeschwindigkeit werden Karteninformationen wie Geschwindigkeitsbeschränkungen oder Kurvengeometrien herangezogen. Zur Bildung einer erlaubten Minimalgeschwindigkeit wird die Maximalgeschwindigkeit unter Berücksichtigung von Fahrervorgaben und weiterer Parameter nach unten verschoben. Innerhalb des so gewonnenen Geschwindigkeitsbandes werden dann verbrauchsoptimale Beschleunigungsphasen und Verzögerungsphasen errechnet. Dabei darf das Geschwindigkeitsband nicht verlassen werden. Zur Umsetzung der Verzögerungsphasen wird Bremsen, Ausrollen im Schubbetrieb und Segeln, wobei der Motor vom Antriebsstrang getrennt wird, eingesetzt. Ein Segeln besitzt Priorität über einen Einsatz des Schubbetriebs und der Schubbetrieb besitzt Priorität vor dem Bremsen, um den Treibstoffbedarf zu minimieren. Damit wird neben dem Einsatz der Bremse auch das Ausrollen im Schubbetrieb oder mittels Segeln zu zuvor berechneten Verzögerungspunkten beschrieben. Zur Berechnung der optimalen Beschleunigungs- und Verzögerungsphasen wird insbesondere die Verwendung von Topografiedaten, wie Höhe, Steigung der Fahrstrecke zwischen einem Startpunkt und einem Zielpunkt der zurückzulegenden Fahrstrecke erwähnt. Um den Rechenaufwand zu begrenzen, erfolgt zuerst eine lokale Optimierung der Fahrstrategie zwischen vorbestimmten Verzögerungs- und Beschleunigungsfixpunkten. Die daraus bestimmten lokalen Fahrstrategien werden dann zu einer Fahrstrategie über die gesamte Fahrroute zusammengesetzt.

Weiterhin ist aus der DE 10 2009 030 784 A1 ein Verfahren zum Steuern des Betriebs eines Fahrzeugs bekannt, wobei basierend auf mehreren Umgebungsparametern, Fahrzeugparametern, Fahrzeugbetriebsparametern und Streckenparametern eine Fahrzeugbetriebskostenfunktion definiert wird. Mithilfe dieser Fahrzeugbetriebskostenfunktion werden iterativ Fahrzeugsteuerparameter für einen vorliegenden Streckenabschnitt optimiert. Die Streckenparameter, wie beispielsweise die Straßenneigung und-Krümmung sind in einer Straßenkarte gespeichert. Darüber hinaus messen Sensoren im Fahrzeug Umgebungs -und Fahrzeugbetriebsparameter einschließlich der Fahrzeuggeschwindigkeit und der Fahrzeugposition relativ zur Straßenkarte.

Andere Verfahren zur Fahrgeschwindigkeitsbestimmung sind aus der DE 102009023423 A1, DE 102008019174 A1, WO 2011162705 A1, WO2011162706 A1, WO 20011002367 A1 oder der DE 102006001818 A1 bekannt.

### Offenbarung der Erfindung

Der Erfindung liegt die Aufgabe zugrunde, ein Verfahren der gattungsgemäßen Art so zu verbessern, dass ein Rechner mit begrenzter Rechenleistung einsetzbar ist bzw. die Anforderung an eine einsetzbare Hardware gering ist.

Diese Aufgabe wird durch ein Verfahren mit den Merkmalen des Anspruches 1 gelöst.

Die Erfindung erlaubt eine Berechnung mittels eines modell-prädiktiven Verfahrens und schafft ein Verfahren zur Berechnung von optimierten Betriebsstrategien, bei dem die Anzahl der erforderlichen Rechenschritte bei gleicher Segmentierung der Strecke und des Geschwindigkeitskorridors, erheblich reduziert wird, so dass die Anforderungen an die Hardware sehr gering bleiben.

Der Kern der Erfindung liegt in der Einschränkung der Berechnung der Durchfahrtskosten auf die physikalisch möglichen Geschwindigkeitsübergänge sowie in der frühzeitigen Erkennung der Zustände, die nicht zur optimalen Betriebsstrategie gehören und somit zu deren Ausschluss aus der Berechnung.

Bei dem erfindungsgemäßen Verfahren werden, anders als bei anderen bekannten Verfahren, nicht alle Durchfahrtskosten berechnet und im Anschluss der günstigste Verlauf ermittelt, sondern es wird ein Berechnungsbereich geschaffen, der die Anzahl der möglichen Geschwindigkeiten reduziert.

### Die Erfindung bietet folgende Vorteile:

Bei einem eigenständigen erfindungsgemäßen System, das nur die Berechnung im Grunde einer Betriebsstrategie, z.B. einer Geschwindigkeitsstrategie, übernimmt, kann zum einen eine weniger leistungsfähige Hardware eingesetzt werden.

Die Berechnung dieser Betriebsstrategie kann zum anderen in vorteilhafter Weise in einem vorhandenen Gerät eingebettet werden, z.B. in einem Fahrzeugleitrechner oder in einem Navigationssystem ohne dabei viele Ressourcen einzubinden.

Das erfindungsgemäße Verfahren baut auf dem Grundgedanken auf, dass eine automatisierte, vorausschauende Beeinflussung von Fahrzeugbetriebsparametern, wie z.B. der Fahrzeuggeschwindigkeit, über einen Tempomaten erreicht wird. Es kann eine voraus liegende Straßensteigung aus einer digitalen Karte verwendet werden. Es kann z.B. ein Geschwindigkeitsprofil für einen voraus liegenden Streckenabschnitt errechnet und dieses z.B. mittels eines Tempomaten automatisiert umgesetzt werden. Durch diese Vorgehensweise wird der Treibstoffbedarf des Fahrzeuges minimiert.

Die Ermittlung des Geschwindigkeitsprofils wird über das erfindungsgemäße Verfahren nach Anspruch 1 erreicht.

Die Erfindung baut ebenfalls auf dem Grundgedanken auf, die vor einem Fahrzeug liegende Strecke in Segmente aufzuteilen und die Segmente anhand von Straßencharakteristika, wie z.B. der Straßensteigung, in diskrete Situationen zu klassifizieren. Beispielsweise kann sich das Fahrzeug einem Straßensegment mit hoher Steigung nähern. Es können mit der Erfindung Sollgeschwindigkeitsvorgaben für einen Tempomaten erzeugt werden, so dass die gewünschte Treibstoffeinsparung erzielbar ist. Die Straßencharakteristika können von einem elektronischen Horizont geliefert werden, welcher mittels einer GPS-Ortsbestimmung und einer digitalen Straßenkarte eine Streckenvorausschau vor der aktuellen Fahrzeugposition bereitstellt.

Die Erfindung beruht ebenfalls auf dem Gedanken, ein Geschwindigkeitsband aus einer für jeden Streckenabschnitt zulässigen Maximalgeschwindigkeit und einer Minimalgeschwindigkeit zu verwenden. Der ideale Geschwindigkeitsverlauf wird innerhalb des Geschwindigkeitsbandes ermittelt. Dabei wird das Geschwindigkeitsband nicht verlassen. Es können Phasen wie Bremsen, Ausrollen im Schubbetrieb und Segeln genutzt werden.

Vorteilhafte Weiterbildungen der Erfindung sind in den Unteransprüchen gekennzeichnet.

In einer vorteilhaften Weiterbildung des erfindungsgemäßen Verfahrens ist vorgesehen, dass die vorausschauende Beeinflussung unter Berücksichtigung von Umfeldinformationen aus digitalen Karten mittels eines Navigationssystems, mit z.B. GPS-Ortsbestimmung, erfolgt. Damit kann eine vorausschauende Geschwindigskeitsregelung und Treibstoffoptimierung leicht umgesetzt werden.

Bei einer weiteren vorteilhaften Ausführung der Erfindung ist der sich ändernde Parameter eine Straßensteigung. Alternativ können aber auch vorausliegende Kurven oder andere, den Treibstoffkonsum beeinflussende Parameter, berücksichtigt werden.

Ein Ausführungsbeispiel wird anhand der Zeichnungen näher erläutert, wobei weitere vorteilhafte Weiterbildungen der Erfindung und Vorteile derselben beschrieben sind. Es zeigen in schematischer Darstellung:
- Fig. 1: ein Ablaufdiagramm einer bevorzugten Variante des erfindungsgemäßen Verfahrens,
- Fig. 2: eine Segment-Knoten-Darstellung zur erfindungsgemäßen Ermittlung des Geschwindigkeitsverlaufs, und
- Fig. 3: eine weitere Segment-Knoten-Darstellung mit markierten Berechnungsbereichen,
- Fig. 4: ein Blockdiagramm, das eine Vorrichtung bzw. ein System zur Ausführung des erfindungsgemäßen Verfahrens zeigt.

Im Folgenden werden verschiedene Begriffe näher erläutert.
- Segment:: Als Segment S wird hier ein Teilstück, beispielsweise 10 Meter, der vorausliegenden Stecke von z.B. 5 km, bezeichnet. Die vorausliegenden Stecke besteht dann aus 500 Segmenten.
- Geschwindigkeitskorridor:: Als Geschwindigkeitskorridor ist eine Eingrenzung von möglichen Geschwindigkeiten auf z.B. +/- 10 km/h gegenüber der zu steuernden Geschwindigkeit gesehen.
- Knoten:: Ein "Knoten" bezeichnet eine diskrete Position auf der vorausliegenden Strecke in Verbindung mit einer diskreten Geschwindigkeit innerhalb des Geschwindigkeitskorridors.
- Setzgeschwindigkeit:: Die Setzgeschwindigkeit ist die tatsächliche vom Fahrzeug ausgeführte Geschwindigkeit innerhalb der vorausliegenden Stecke ST.
- Geschwindigkeitsschritt:: Eine Berechnung der Geschwindigkeit erfolgt in bestimmten festgelegten Geschwindigkeitsschritten innerhalb des Segments. Ein Geschwindigkeitsschritt kann z.B. 1 km/h betragen, so dass bei einer Segmentlänge von 10 Meter insgesamt 11 Geschwindigkeitsschritte vorhanden sind.

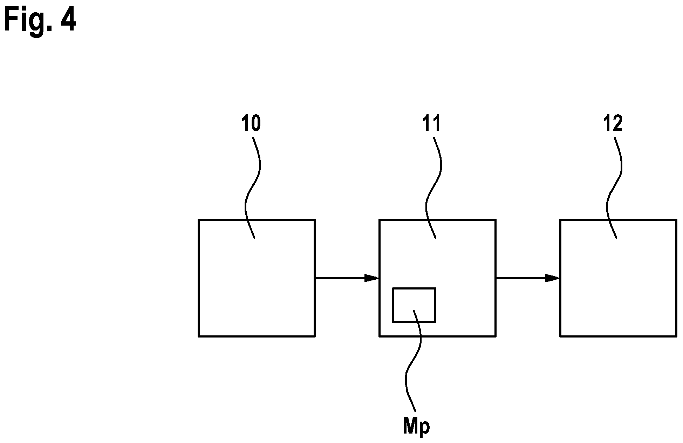

Wesentlich für die Erfindung ist der Einsatz eines Speichermediums. Beispielsweise eines RAM-Speichers. Das zur Ausführung der Erfindung benötigte System umfasst einen Speicher Mp, in dem für jeden Knoten ein Eintrag erstellt werden kann, wobei ein Eintrag in Mp eindeutig identifizierbar ist. Aus der Bezeichnung des Eintrags oder in seinem Speicher muss ein eindeutiger Bezug Knoten herstellbar sein. Der Speicher Mp muss mindestens einen Bezeichner für einen Eintrag bzw. Vorgängereintrag sowie einen Kostenwert beinhalten. Fig. 4 zeigt den Speicher Mp.

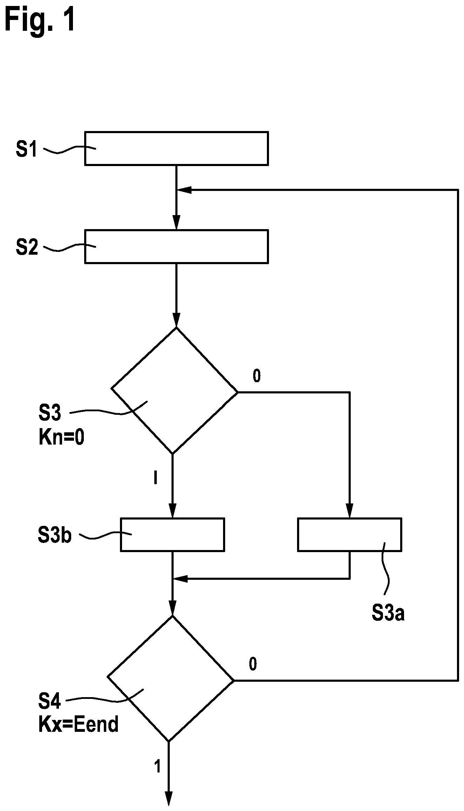

Bei dem erfindungsgemäßen Verfahren werden, anders als bei anderen bekannten Verfahren, nicht alle Durchfahrtskosten berechnet und im Anschluss der günstigste Verlauf ermittelt, sondern es werden folgende Schritte, wie Fig. 1 zeigt, durchgeführt.

### Schritt S1:

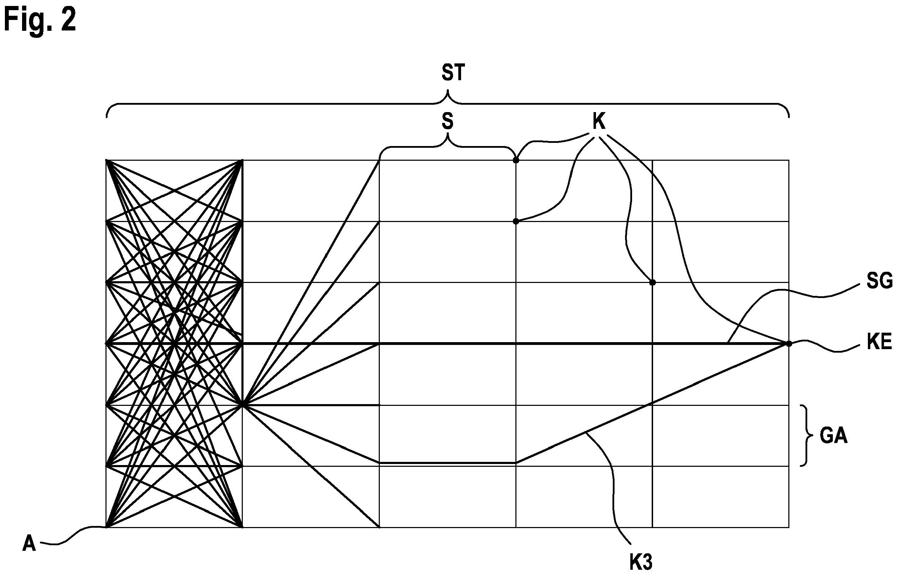

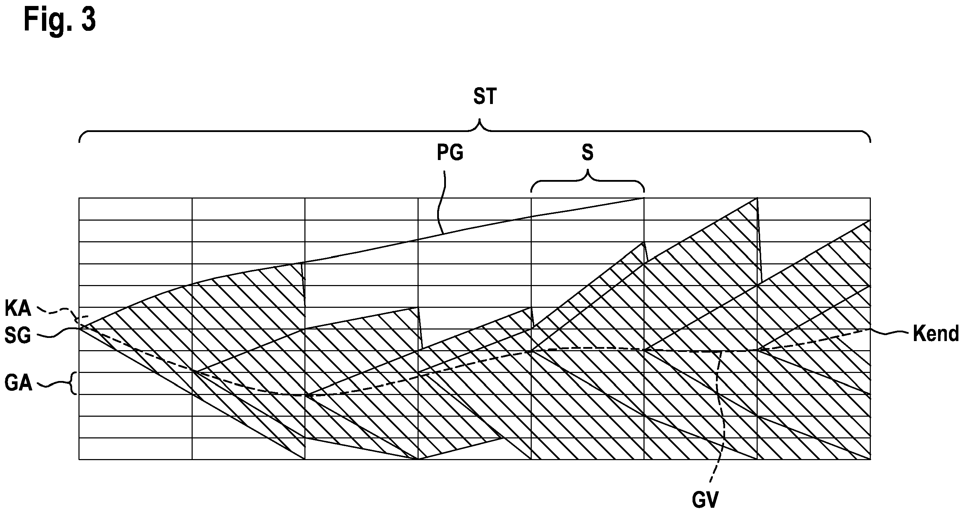

In einem ersten Schritt S1 wird zunächst ein Eintrag für den aktuellen Knoten Ka erstellt. Hierbei wird die Position 0 und die aktuelle Geschwindigkeit berücksichtigt. Weiterhin wird ein Eintrag Kend bzw. KE, dass das letzte Segment und die zugehörige Setzgeschwindigkeit darstellt, erstellt. Ka bzw. A sowie Kend bzw. KE sind in den Figuren 2 und 3 gezeigt.

### Schritt S2:

In einem zweiten Schritt S2 werden unter Berücksichtigung mindestens der Steigung auf dem folgenden Segment und der Motorleistung, wobei auch die Bremsleistung herangezogen werden kann, die innerhalb einer Segmentlänge S erreichbaren Geschwindigkeiten innerhalb des Geschwindigkeitskorridors berechnet. Damit sind die möglichen Nachfolgerknoten Kn bestimmt, die aus dem aktuellen Knoten Ka bzw. A erreichbar sind. Dies entspricht dem ersten Segment in Fig. 2, das eine Vielzahl von Linien beinhaltet.

### Schritt S3:

In einem dritten Schritt S3 werden für jeden Nachfolgerknoten Kn die Durchfahrtskosten Kan berechnet.

Wenn in Mp kein Eintrag Kn existiert, wird der Schritt S3a durchgeführt, wobei ein Eintrag Kn in Mp erstellt wird.

### Schritt S3a:

In diesem Eintrag wird u.a. ein Bezeichner, mit dem der aktuelle Knoten Ka identifiziert wird, sowie ein Kostenwert Wkn gespeichert. Wkn ist die Summe aus den aktuell berechneten Durchfahrtskosten Kan und dem Kostenwert Wka, der im Eintrag Ka gespeichert ist.

Wenn in Mp bereits ein Eintrag Kn vorhanden ist, wird der Schritt S3a durchgeführt, wobei Wkn grösser ist als (Kan + Wka).

### Schritt S3b:

Im Schritt S3b wird das vorhandene Kn entsprechend Schritt S3a ersetzt bzw. dessen Werte aktualisiert.

### Schritt S4:

Im vierten Schritt wird der Eintrag Kx aus dem Speicher Mp gelesen in dem der kleinste Kostenwert Wk gespeichert ist und mit Schritt S2 weiterverfahren, wie Fig. 1 zeigt, wobei Kx als Ka angenommen wird.

Die Schritte S2 bis S4 werden solange wiederholt bis Kx = Kend ist.

Fig. 2 zeigt eine Segment-Knoten-Darstellung. Mit Segmenten S und Knoten K, wobei die Summe der Segmente die vorauseilende Strecke ST darstellen.

Mit A ist die Anfangsposition in Fig. 2 gekennzeichnet. Die Kurve K3 entspricht einem Geschwindigkeitsverlauf bzw. einer Betriebsstrategie, deren Summe der Durchfahrtkosten minimal ist. In Fig. 2 bedeuten:
- KE =: Kend (Ende des letztes Segment)
- SG =: Setzgeschwindigkeit
- GA =: Geschwindigkeitsausschnitt
- K =: Knoten
- S =: Segment
- A =: Anfang (Ka)
- ST =: Vorausliegende Strecke

Fig. 2 veranschaulicht, dass es grundsätzlich eine Vielzahl von Wegen innerhalb der einzelnen Knoten K gibt, wie in der Nähe des Anfangspunktes A zu sehen ist. Durch weitere Eingrenzungen bzw. Verfahren lassen sich die Anzahl der Berechnungen weiter eingrenzen.

Fig. 3 veranschaulicht in einem Knoten-Segment-Diagramm das Verfahren, das eine erfindungsgemäße Eingrenzung nutzt. Fig. 3 zeigt weiterhin den Geschwindigkeitsverlauf GV, gemäß der erfindungsgemäßen Betriebsstrategie. Bei diesem Verlauf ist die Summe der Durchfahrkosten minimal. Der jeweilige Berechnungsbereich ist durch eine Schraffur gekennzeichnet und durch die physikalische Grenze PG begrenzt.

Durch dieses Verfahren lassen sich in der Praxis die Anzahl der Berechnungen der Durchfahrtskosten auf 0,3 bis 0,5 der maximalen Berechnungen begrenzen, ohne das Ergebnis zu verändern.

Wie Fig. 4 veranschaulicht, ist ein Navigationssystem 10 mit GPS-Ortung vorhanden, dessen digitale Karte bzw. dessen Kartendaten einem Auswertesystem 11 mit dem Speicher Mp zur Verfügung gestellt werden. Das System 11 steuert einen Tempomaten 12, so dass das Fahrzeug mit optimierter Geschwindigkeit fährt.

## Patentansprüche

1. Verfahren zur vorausschauenden Beeinflussung einer Fahrzeuggeschwindigkeit, wobei die Fahrzeuggeschwindigkeit an einer Fahrstrecke mit einem sich ändernden Parameter innerhalb eines vorgegebenen Geschwindigkeitskorridors beeinflußt wird, wobei Segmente mit einer definierten Segmentlänge sowie Geschwindigkeitsschritte eingesetzt werden, wobei die vorausliegende Strecke in Segmente (S) unterteilt wird, denen verschiedene Geschwindigkeitsschritte (GA) zugeordnet werden, wobei sich in einem zweidimensionalen Diagramm schneidende Segmentwerte und Geschwindigkeitswerte als Knoten definiert werden und wobei jedem Knoten eine diskrete Position auf der vorausliegenden Strecke des Fahrzeugs in Verbindung mit einer diskreten Geschwindigkeit zuzuordnen ist, wobei für jeden Knoten mindestens ein Eintrag in einem Speichermedium speicherbar ist, wobei für den jeweiligen Knoten ein Kostenwert speicherbar ist und wobei für mehrere Knoten im Speichermedium gespeicherte Kostenwerte mit neuen Kostenwerten verglichen werden, um eine kostenoptimale Fahrzeuggeschwindigkeit an einer Fahrstrecke zu bestimmen, **dadurch gekennzeichnet,**
- **dass** in einem ersten Schritt ein Eintrag in das Speichermedium für einen aktuellen Knoten (Ka) erstellt wird, der die aktuelle Position und Geschwindigkeit des Fahrzeuges darstellt,
- **dass** in einem zweiten Schritt die innerhalb einer Segmentlänge erreichbaren Geschwindigkeiten berechnet werden, so dass mehrere mögliche Nachfolgeknoten (Kn) bestimmt werden, die aus dem aktuellen Knoten erreichbar sind,
- **dass** in einem dritten Schritt für jeden Nachfolgeknoten (Kn) Durchfahrkosten (Kan) berechnet werden, wobei ein Vergleich der im Speichermedium gespeicherten Werte erfolgt, um die optimale Fahrzeuggeschwindigkeit zu ermitteln,
- **dass** in dem dritten Schritt, wenn kein Eintrag für den Nachfolgeknoten (Kn) im Speichermedium existiert, ein Eintrag des Nachfolgeknotens (Kn) erstellt wird, der einen Kostenwert (Wkn) beinhaltet, wobei, wenn ein Eintrag für den Nachfolgeknoten (Kn) im Speichermedium existiert, und der bereits gespeicherte Kostenwert (Wkn) grösser ist als der Kostenwert (Wkn') des neuen Knotens ist, dass dann der vorhandene Kostenwert (Wkn) durch den neuen Kostenwert (Wkn') ersetzt wird und
- **dass** jedem Knoten eine diskrete Position auf der vorausliegenden Strecke in Verbindung mit einer diskreten Geschwindigkeit innerhalb eines Geschwindigkeitskorridors zuordbar ist, und dass im zweiten Schritt die innerhalb einer Segmentlänge erreichbaren Geschwindigkeiten innerhalb des Geschwindigkeitskorridors berechnet werden.

2. Verfahren nach Anspruch 1, **dadurch gekennzeichnet, dass** in einem vierten Schritt mindestens ein Eintrag (Kx) aus dem Speichermedium gelesen wird, in dem der kleinste Kostenwert (Wk) gespeichert wird, wobei die Schritte eins bis vier solange wiederholt werden, bis der aktuelle Eintrag einem Eintrag (Kend) des Streckenendes der zu berechnenden vorausliegenden Strecke (St) entspricht.

3. Verfahren nach einem der vorhergehenden Ansprüche, **dadurch gekennzeichnet, dass** der sich ändernde Parameter eine Straßensteigung ist.

4. Verfahren nach einem der vorhergehenden Ansprüche, **dadurch gekennzeichnet, dass** eine Positionsbestimmung des Fahrzeugs mittels GPS erfolgt.

5. Tempomat (12) mit Mitteln, die ein Verfahren nach einem der vorhergehenden Ansprüche umsetzen.

## Claims

1. Method for predictively influencing a vehicle speed, wherein the vehicle speed is influenced on a route with a changing parameter within a predefined speed corridor, wherein segments with a defined segment length and speed sections are used, wherein the route lying ahead is divided into segments (S), to which various speed sections (GA) are assigned, wherein segment values and speed values which intersect in a two-dimensional diagram are defined as nodes, and wherein each node is to be assigned a discrete position on the vehicle's route lying ahead in conjunction with a discrete speed, wherein at least one entry can be stored for each node in storage medium, wherein a cost value can be stored for the respective node, and wherein cost values which are stored for a plurality of nodes in the storage medium are compared with new cost values in order to determine a cost-optimum vehicle speed on a route,
**characterized**
- **in that** in a first step an entry is made in the storage medium, for a current node (Ka) which represents the current position and speed of the vehicle,
- **in that** in a second step the speeds which can be reached within a segment length are calculated so that a plurality of possible subsequent nodes (Kn) which can be reached from the current node are determined,
- **in that** in a third step travel-through costs (Kan) are calculated for each subsequent node (Kn), wherein the values stored in the storage medium are compared in order to determine the optimum vehicle speed,
- **in that** in the third step, if there is no entry for the subsequent node (Kn) in the storage medium, an entry of the subsequent node (Kn) is produced which contains a cost value (Wkn), wherein if there is an entry for the subsequent node (Kn) in the storage medium, and the cost value (Wkn) which is already stored is higher than the cost value (Wkn') of the new node, the existing cost value (Wkn) is replaced by the new cost value (Wkn'), and
- **in that** each node can be assigned a discrete position on the route lying ahead, in conjunction with a discrete speed within a speed corridor, and in that in the second step within the speed corridor, which can be reached within a segment length, are calculated.

2. Method according to Claim 1, **characterized in that** in a fourth step at least one entry (Kx) is read out from the storage medium in which the smallest cost value (Wk) is stored, wherein the steps one to four are repeated until the current entry of the route end corresponds to an entry (Kend) of the route (St) lying ahead, which is to be calculated.

3. Method according to one of the preceding claims, **characterized in that** the changing parameter is a gradient of the road.

4. Method according to one of the preceding claims, **characterized in that** the position of the vehicle is determined by means of GPS.

5. Cruise controller (12) having means which implement a method according to one of the preceding claims.

## Revendications

1. Procédé d'influence prévisionnelle de la vitesse d'un véhicule, la vitesse du véhicule étant influencée sur une section de route avec un paramètre variable à l'intérieur d'un couloir de vitesses prédéfini, des segments avec une longueur de segment définie ainsi que des degrés de vitesses étant utilisés, la section à venir étant divisée en segments (S) auxquels sont associés différents degrés de vitesses (GA), des valeurs de segments et des valeurs de vitesses s'intersectant dans un diagramme bidimensionnel étant définies sous forme de nœuds et à chaque nœud devant être associée une position discrète sur la section à venir du véhicule, en association avec une vitesse discrète, au moins une entrée dans un support de mémoire pouvant être mémorisée pour chaque nœud, une valeur de coût pouvant être mémorisée pour le nœud respectif et des valeurs de coûts mémorisées dans le support de mémoire pour plusieurs nœuds étant comparées avec de nouvelles valeurs de coûts afin de déterminer une vitesse de véhicule optimale en termes de coûts sur une section de route,
**caractérisé en ce que**
- dans une première étape, une entrée dans le support de mémoire est créée pour un nœud actuel (Ka), laquelle représente la position et la vitesse actuelles du véhicule,
- dans une deuxième étape, les vitesses pouvant être atteintes à l'intérieur d'une longueur de segment sont calculées de telle sorte que plusieurs nœuds successifs possibles (Kn) soient déterminés, lesquels peuvent être atteints à partir du nœud actuel,
- dans une troisième étape, des coûts de conduite (Kan) sont calculés pour chaque nœud successif (Kn), une comparaison des valeurs mémorisées dans le support de mémoire étant effectuée afin de déterminer la vitesse optimale du véhicule,
- dans la troisième étape, si aucune entrée n'existe pour le nœud successif (Kn) dans le support de mémoire, une entrée du nœud successif (Kn) est créée, laquelle contient une valeur de coût (Wkn), et s'il existe une entrée pour le nœud successif (Kn) dans le support de mémoire, et que la valeur de coût déjà mémorisée (Wkn) est supérieure à la valeur de coût (Wkn') du nouveau nœud, la valeur de coût existante (Wkn) est alors remplacée par la nouvelle valeur de coût (Wkn') et
- une position discrète sur la section à venir peut être associée à chaque nœud en association avec une vitesse discrète à l'intérieur d'un couloir de vitesses, et, dans la deuxième étape, les vitesses pouvant être atteintes à l'intérieur d'une longueur de segment sont calculées à l'intérieur du couloir de vitesses.

2. Procédé selon la revendication 1, **caractérisé en ce que**, dans une quatrième étape, au moins une entrée (Kx) est lue dans le support de mémoire, dans lequel est mémorisée la plus petite valeur de coût (Wk), les étapes un à quatre étant répétées jusqu'à ce que l'entrée actuelle corresponde à une entrée (Kend) de la fin de section de la section à venir (St) à calculer.

3. Procédé selon l'une quelconque des revendications précédentes, **caractérisé en ce que** le paramètre variable est une inclinaison de la route.

4. Procédé selon l'une quelconque des revendications précédentes, **caractérisé en ce qu'**une détermination de position du véhicule s'effectue au moyen d'un GPS.

5. Régulateur de vitesse (12) comprenant des moyens qui mettent en œuvre un procédé selon l'une quelconque des revendications précédentes.
